# EUROPÄISCHE PATENTSCHRIFT

(11) **EP 3 283 378 B1**
(45) Veröffentlichungstag und Bekanntmachung des Hinweises auf die Patenterteilung: **07.10.2020**
(21) Anmeldenummer: 16720995.6
(22) Anmeldetag: 15.04.2016
(51) Int. Cl.: B64D 11/06, A47B 5/00, A47B 5/04

(54) **KLAPPTISCH**
FOLDING TABLE
TABLETTE PLIANTE

(30) Priorität: 15.04.2015 AT 502992015
(43) Veröffentlichungstag der Anmeldung: 21.02.2018
(73) Patentinhaber: FACC AG, 4910 Ried im Innkreis (AT)
(72) Erfinder: ENZINGER, Sindhuja-Cheema, 4950 Altheim (AT); KONRAD, Wilfried Johann, 4942 Gurten (AT)
(74) Vertreter: Sonn & Partner Patentanwälte
(86) Internationale Anmeldenummer: PCT/AT2016/050098
(87) Internationale Veröffentlichungsnummer: WO 2016/164953

(56) Entgegenhaltungen:
- EP-A1- 1 172 252
- US-A1- 2003 188 672
- US-A1- 2009 078 169

## Beschreibung

Die Erfindung betrifft einen Klapptisch, insbesondere für ein Flugzeug, mit einer Tischplatte, mit einer Trageinrichtung für die Tischplatte, mit einer Ausziehvorrichtung zum Überführen der Trageinrichtung für die Tischplatte aus einer im Wesentlichen vertikalen Verstauposition über eine insbesondere im Wesentlichen vertikale Ausziehposition in eine im Wesentlichen horizontale Gebrauchsposition, wobei die Ausziehvorrichtung eine Führungseinrichtung zum Führen der Trageinrichtung zwischen der Verstauposition und der Ausziehposition aufweist.

Ein solcher Klapptisch ist beispielsweise aus der EP 1 836 927 A1 bekannt. Dieser Tisch weist ein Untergehäuse und eine Tischplatte auf, die von einer senkrecht im Untergehäuse angeordneten Staustellung in eine Nutzstellung verfahrbar ist, bei der die Tischplatte im Wesentlichen waagrecht angeordnet ist. Das Untergehäuse weist einen Deckel auf, welcher zum Herausziehen der Tischplatte ausgeklappt wird. Ein Tragrahmen für die Tischplatte ist gelenkig an Tragarmen befestigt, welche über Gleitrahmen in seitlichen Führungsschienen verschieblich sind. Der Schwenkwinkel des Tragrahmens relativ zu den Tragarmen wird durch bogenförmige Führungen begrenzt. Dadurch kann der Tragrahmen nicht über die horizontale Nutzstellung hinaus nach unten geschwenkt werden. Zudem sind vier Stützarme vorgesehen, deren eine Enden schwenkbar mit den Tragarmen verbunden sind und deren andere Enden in Führungen am Tragrahmen verschieblich angeordnet sind. Das Herausziehen der Tischkonstruktionen wird durch Federn gegen die Schwerkraft unterstützt.

Nachteiligerweise ist daher beim Stand der Technik die Führung der Tischplatte beim Ausziehen getrennt vom Umklappmechanismus in die Gebrauchsstellung. Dadurch sind getrennte Bewegungsabläufe vorgesehen, welche wenig intuitiv und ergonomisch sind. Darüber hinaus wird, auch durch die größere Anzahl von Gelenken, der Konstruktionsaufwand erhöht. Weiters können Einbußen in der Stabilität auftreten.

Weitere Ausführungen von Klapptischen sind in den US 2009/0078169A1, US2003/0188672 A1, US 2,536,366 und FR 2 802 070 beschrieben.

Erfindungsgemäß ist ein Klapptisch nach Anspruch 1 offenbart. Erfindungsgemäß weist die Führungseinrichtung eine im Wesentlichen geradlinige erste Führungsbahn für ein erstes Führungselement an der Trageinrichtung und eine einen geradlinigen Abschnitt und einen bogenförmigen Abschnitt aufweisende zweite Führungsbahn für ein zweites Führungselement an der Trageinrichtung auf, wobei die Trageinrichtung entlang des geradlinigen Abschnitts der zweiten Führungsbahn der Führungseinrichtung von der Verstauposition in die Ausziehposition verschieblich und entlang des bogenförmigen Abschnitts der zweiten Führungsbahn der Führungseinrichtung von der Ausziehposition in die Gebrauchsposition verschwenkbar ist.

Demnach verfügt die erfindungsgemäße Führungseinrichtung über eine erste Führungsbahn, welcher im Wesentlichen über deren gesamte Länge geradlinig bzw. linear verläuft, und andererseits über eine zweite Führungsbahn, welche einen geradlinigen Abschnitt und unmittelbar daran anschließend einen bogenförmigen Abschnitt aufweist. In der ersten Führungsbahn ist ein erstes Führungselement gelagert, welches an einer ersten Stelle mit der Trageinrichtung, insbesondere einem Tragarm der Trageinrichtung, gekoppelt ist. In der zweiten Führungsbahn ist ein zweites Führungselement gelagert, welches an einer zweiten Stelle mit der Trageinrichtung, insbesondere dem Tragarm der Trageinrichtung, gekoppelt ist. Der Abstand zwischen der ersten Stelle und der zweiten Stelle ist vorzugsweise im Wesentlichen konstant. Beim Ausziehvorgang wandern das erste und zweite Führungselement entlang der ersten bzw. zweiten Führungsbahn. Wenn das zweite Führungselement von dem geradlinigen Abschnitt in den bogenförmigen Abschnitt gelangt, wird die Trageinrichtung entsprechend dem Verlauf des bogenförmigen Abschnitts der zweiten Führungsbahn verschwenkt. Durch die gleichzeitige Führung der Trageinrichtung über das erste Führungselement an der geradlinigen ersten Führungsbahn ist die Stellung der Trageinrichtung bei jedem Schwenkwinkel festgelegt. Vorteilhafterweise wird daher eine Zwangsführung der Trageinrichtung für die Tischplatte von der Verstau- über die Auszieh- bis in die Gebrauchsposition (und umgekehrt) erzielt. Die erfindungsgemäße Ausführung zeichnet sich durch eine teilesparende und daher kostengünstige Bauweise aus. Darüber hinaus kann der Auszieh- bzw. Einklappvorgang besonders intuitiv und ergonomisch gestaltet werden. Weiters kann eine besonders stabile Ausführung erzielt werden. Darüber hinaus eignet sich die erfindungsgemäße Ausführung insbesondere dafür, das Ausklappen der Tischplatte mit einer einzelnen Antriebseinheit für den Auszieh- und Verschwenkvorgang zu bewerkstelligen.

Um eine Zwangsführung der Trageinrichtung zwischen der im Wesentlichen vertikalen Ausziehposition und der im Wesentlichen horizontalen Gebrauchsposition der Tischplatte zu bewirken, ist es günstig, wenn der bogenförmige Abschnitt der zweiten Führungsbahn der Führungseinrichtung einen Mittelpunktswinkel von im Wesentlichen 90° aufweist. Demnach beschreibt der bogenförmige Abschnitt der zweiten Führungsbahn einen Winkel von im Wesentlichen 90°, während der entsprechende Abschnitt der ersten Führungsbahn im Wesentlichen geradlinig verläuft. Beim Verschieben des zweiten Führungselements entlang des bogenförmigen Abschnitts der zweiten Führungsbahn wird die Trageinrichtung mit der daran befestigten Tischklappe um denselben Winkel von im Wesentlichen 90° verschwenkt.

Um die Tischplatte an gegenüberliegenden Seiten abzustützen, ist es vorteilhaft, wenn die Ausziehvorrichtung zwei Führungseinrichtungen zum Führen je eines Tragarms der Trageinrichtung aufweist. Beide Führungseinrichtungen sind vorzugsweise im Wesentlichen ident ausgebildet. Jede Führungseinrichtung weist daher einerseits eine erste Führungsbahn mit einem geradlinigen Verlauf auf, in welcher ein mit der Trageinrichtung verbundenes erstes Führungselement verschieblich ist. Darüber hinaus weist jede Führungseinrichtung eine zweite Führungsbahn auf, in welcher ein mit der Trageinrichtung verbundenes zweites Führungselement verschieblich ist. Die zweite Führungsbahn weist jeweils einen bogenförmigen bzw. gekrümmten zweiten Abschnitt auf, mit welchem die Verschwenkung der Trageinrichtung zwischen der Auszieh- und der Gebrauchsposition bewerkstelligt wird. Das erste und zweite Führungselement sind an unterschiedlichen Längspositionen mit dem Tragarm der Trageinrichtung verbunden. Dadurch kann die Zwangsführung der Trageinrichtung bzw. der daran befestigten Tischplatte erreicht werden.

Hinsichtlich einer konstruktiv einfachen, kostengünstig herzustellenden Ausführung ist es von Vorteil, wenn als Führungseinrichtung ein Plattenelement vorgesehen ist, an welchem die erste und die zweite Führungsbahn ausgebildet sind. Die erste und die zweite Führungsbahn sind bevorzugt benachbart an dem Plattenelement vorgesehen. Vorzugsweise ist die erste Führungsbahn durch eine langgestreckte Durchtrittsöffnung des Plattenelements mit im Wesentlichen konstanter Breite gebildet, so dass das erste Führungselement von Seite der Trageinrichtung durch die Durchtrittsöffnung auf die von der Trageinrichtung abgewandte Seite des Plattenelements ragt. Demgegenüber kann die zweite Führungsbahn durch eine Vertiefung des Plattenelements gebildet sein, in welcher das zweite Führungselement, insbesondere ein starr mit der Trageinrichtung verbundener Führungszapfen, geführt ist.

Zum selbsttätigen Ausziehen und Verschwenken der Tischplatte aus der Verstauposition ist es günstig, wenn die Führungseinrichtung mit einer Antriebseinheit, vorzugsweise einem Elektromotor, verbunden ist, mit welcher die Trageinrichtung von der Verstauposition über die Ausziehposition in die Gebrauchsposition überführbar ist. Besonders bevorzugt ist es, wenn eine einzige Antriebseinheit vorgesehen ist, um die Trageinrichtung zunächst von der Verstauposition in die Ausziehposition zu verschieben und danach von der Ausziehposition in die Gebrauchsposition zu verschwenken. Diese Ausführung wird dadurch ermöglicht, dass die Führungseinrichtung eine Zwangsführung der Trageinrichtung zunächst entlang der geradlinigen Abschnitte der ersten und zweiten Führungsbahn und danach entlang des bogenförmigen Abschnitts der zweiten Führungsbahn bei weiterhin geradlinigem Verlauf der ersten Führungsbahn bewirkt.

Gemäß einer bevorzugten Ausführungsform ist die Antriebseinheit dazu eingerichtet, das erste Führungselement entlang der ersten Führungsbahn der Führungseinrichtung zu bewegen, wobei das zweite Führungselement vorzugsweise passiv entlang der zweiten Führungsbahn der Führungseinrichtung geführt wird. Bei dieser Ausführungsform wird das erste Führungselement angetrieben, wohingegen das zweite Führungselement passiv, d.h. ohne eigenen Antrieb, entlang der zweiten Führungsbahn geführt wird.

Um das Ausziehen und Verschwenken der Tischplatte mit einer besonders einfachen, zuverlässigen Antriebseinheit zu ermöglichen, ist es günstig, wenn die Antriebseinheit dazu eingerichtet ist, das erste Führungselement in Drehbewegung zu versetzen, wobei das erste Führungselement an der Trageinrichtung mit einem Kraftübertragungselement verbunden ist, mit welchem die Drehbewegung des ersten Führungselements in eine lineare Bewegung des ersten Führungselements entlang der ersten Führungsbahn umwandelbar ist. Demnach ist die Antriebseinheit mit dem ersten Führungselement verbunden, welches im angetriebenen Zustand eine Drehbewegung ausführt. Vorzugsweise sitzt die Antriebseinheit unmittelbar auf dem ersten Führungselement, welches bei dieser Ausführung als Antriebswelle ausgebildet ist. Gemäß einer bevorzugten Ausführung sind zwei Führungseinrichtungen an gegenüberliegenden Seiten des Klapptisches vorgesehen, wobei das als Antriebswelle ausgebildete erste Führungselement für beide Führungseinrichtungen verwendet wird. Darüber hinaus ist es bei dieser Ausführung günstig, wenn die Trageinrichtung, insbesondere ein Tragarm der Trageinrichtung, drehbar mit dem ersten Führungselement verbunden ist. Weiters ist bei dieser Ausführung ein Kraftübertragungselement vorgesehen, welches die Drehbewegung des ersten Führungselements aufnimmt und in eine Verschiebung des ersten Führungselements entlang der ersten Führungsbahn übersetzt.

Die Verschiebung des ersten Führungselements kann besonders sicher und zuverlässig bewerkstelligt werden, wenn als Kraftübertragungselement ein Zahnrad vorgesehen ist, welches bei der Bewegung des ersten Führungselements entlang der ersten Führungsbahn mit einer Zahnstange kämmt, wobei die Zahnstange vorzugsweise im Wesentlichen dieselbe Länge wie die erste Führungsbahn der Führungseinrichtung aufweist. Bei dieser Ausführung ist das Zahnrad vorzugsweise drehfest mit einem Ende des ersten Führungselements verbunden. Besonders bevorzugt ist es, wenn das erste Führungselement für zwei Führungseinrichtungen an gegenüberliegenden Seiten verwendet wird, wobei jedes Ende des ersten Führungselements mit einem Zahnrad verbunden ist, das an einer entsprechenden Zahnstange abläuft. Vorzugsweise tritt das erste Führungselement durch eine die erste Führungsbahn bildende Durchtrittsöffnung der Führungseinrichtung auf die von der Trageinrichtung abgewandte Seite der Führungseinrichtung durch. Das durchtretende Ende des ersten Führungselements ist bei dieser Ausführung drehfest mit dem Zahnrad verbunden, welches in die entsprechend geformte Zahnstange eingreift. Dadurch wandert das Zahnrad im angetriebenen Zustand des ersten Führungselements je nach Antriebsrichtung entlang der Zahnstange nach oben bzw. nach unten.

Um die Überführung zwischen der Verstau- und der Gebrauchsposition der Tischplatte mit einer möglichst geringen Leistungsaufnahme der Antriebseinheit bewerkstelligen zu können, ist gemäß einer besonders bevorzugten Ausführung ein Federelement vorgesehen, welches der Verschwenkung der Trageinrichtung in Richtung der Gebrauchsposition entgegenwirkt und/oder welches die Verschwenkung der Trageinrichtung aus der Gebrauchsposition in Richtung der Ausziehposition unterstützt. Beim Verschwenken der Trageinrichtung von der Auszieh- in die Gebrauchsposition wird das Federelement unter dem Einfluss des Eigengewichts der Trageinrichtung bzw. der Tischplatte gespannt. Demnach liegt das Federelement in der Gebrauchsposition im gespannten Zustand vor. Die gespeicherte Spannenergie des Federelements wird bei der Verschwenkung der Tischplatte von der Gebrauchs- in die Ausziehposition freigegeben, um das Anheben der Trageinrichtung samt der Tischplatte zu unterstützen. In der Ausziehposition liegt das Federelement bevorzugt im entspannten Zustand vor.

Darüber hinaus kann eine weitere Feder vorgesehen sein, mit welcher die Verschiebung der Trageinrichtung von der Verstauposition in die Ausziehposition unterstützt wird. Die weitere Feder wird beim Verschieben der Trageinrichtung von der Ausziehposition in die Verstauposition gespannt. Als weitere Feder ist vorzugsweise eine Schraubenfeder vorgesehen, welche durch eine Drehbewegung des ersten Führungselements gespannt bzw. entspannt wird.

Um die Federkraft beim Ausklappen bzw. Einklappen der Tischplatte abschnittsweise zur Verfügung zu stellen, ist es günstig, wenn das Federelement mit einem Schwenkhebel verbunden ist, welcher durch das erste oder das zweite Führungselement an der Trageinrichtung gegen die Kraft des Federelements verschwenkbar ist. Der Schwenkhebel ist am einen Ende um eine ortsfeste Schwenkachse gelagert, welche sich vorzugsweise im Wesentlichen in horizontaler Richtung erstreckt. Am anderen Ende des Schwenkhebels greift das eine Ende des Federelements an, dessen anderes Ende ortsfest gelagert ist. Demnach schlägt das erste oder das zweite Führungselement während dessen geführter Bewegung in Richtung der Gebrauchsposition an dem Schwenkhebel an. Im angeschlagenen Zustand wird der Schwenkhebel durch das erste bzw. zweite Führungselement nach oben gedrückt, wobei das Federelement mit Unterstützung des Gewichts der Trageinrichtung samt der Tischplatte gespannt wird. Beim Verschwenken der Trageinrichtung mit der Tischplatte von der Gebrauchs- in die Ausziehposition wird die Spannenergie des Federelements über den Schwenkhebel auf das erste bzw. zweite Führungselement übertragen, so dass das Anheben der Trageinrichtung mit der Tischplatte unterstützt wird. Somit kann die Antriebseinheit in der Phase höchster Belastung aufgrund des Eigengewichts der Trageinrichtung bzw. der Tischplatte durch den vorgespannten Schwenkhebel unterstützt werden. Diese Ausführung hat den Vorteil, dass die von der Antriebseinheit bereitzustellende maximale Antriebskraft reduziert werden kann. Somit kann eine vergleichsweise schwache Antriebseinheit verwendet werden, um die Trageinrichtung mit der Tischplatte aus der Gebrauchsposition in die Ausziehposition hochzuschwenken. Während der Verschiebung der Trageinrichtung zwischen der Verstau- und der Ausziehposition liegt das Federelement vorzugsweise im entspannten Zustand vor.

Gemäß einer besonders bevorzugten Ausführung ist der Abstand zwischen der Angriffsstelle des ersten bzw. zweiten Führungselements an dem Schwenkhebel und der Schwenkachse des Schwenkhebels bei einem ersten Schwenkwinkel der Trageinrichtung beim Verschwenken von der im Wesentlichen vertikalen Ausziehposition in Richtung der im Wesentlichen horizontalen Gebrauchsposition größer als bei einem zweiten Schwenkwinkel der Trageinrichtung. Bei dieser Ausführung ist daher die Kraftübertragung vom Schwenkhebel auf das daran angeschlagene erste bzw. zweite Führungselement vom Schwenkwinkel der Trageinrichtung abhängig. Die variable Kraftübertragung resultiert aus den Hebelverhältnissen zwischen dem Schwenkhebel und dem daran angreifenden ersten bzw. zweiten Führungselement. Je größer der Abstand zwischen dem Angriffspunkt des ersten bzw. zweiten Führungselements am Schwenkhebel und dessen Schwenkachse ist, desto kleiner ist das vom Schwenkhebel auf das erste bzw. zweite Führungselement übertragene Drehmoment. Dadurch kann die Antriebseinheit beim Hochschwenken der Trageinrichtung aus der Gebrauchsposition gerade in der Phase höchster Lastwirkung maximal unterstützt werden.

Zu diesem Zweck ist es überdies günstig, wenn der Abstand zwischen der Angriffsstelle des ersten bzw. zweiten Führungselements an dem Schwenkhebel und der Schwenkachse des Schwenkhebels bei einem dritten Schwenkwinkel der Trageinrichtung beim Verschwenken von der im Wesentlichen vertikalen Ausziehposition in Richtung der im Wesentlichen horizontalen Gebrauchsposition größer als bei dem zweiten Schwenkwinkel der Trageinrichtung ist. Beim Verschwenken der Trageinrichtung von der Auszieh- in die Gebrauchsposition wird der Schwenkhebel im angeschlagenen Zustand des ersten bzw. zweiten Führungselements gegen die Kraft des Federelements verschwenkt, wobei der zwischen dem ersten bzw. zweiten Führungselement und der Schwenkachse des Schwenkhebels gebildete Kraftarm je nach Schwenkwinkel der Trageinrichtung variiert.

Bei dieser Ausführung ist weiters bevorzugt vorgesehen, dass der erste Schwenkwinkel der Trageinrichtung kleiner als der zweite Schwenkwinkel der Trageinrichtung ist, welcher kleiner als der dritte Schwenkwinkel der Trageinrichtung ist. Beim Verschwenken der Trageinrichtung von der Auszieh- in die Gebrauchsposition durchläuft die Trageinrichtung nacheinander den ersten Schwenkwinkel, den zweiten Schwenkwinkel und den dritten Schwenkwinkel, wobei die Kraftübertragung vom federbelasteten Schwenkhebel auf das erste bzw. zweite Führungselement mit dem zweiten Schwenkwinkel ein Maximum erreicht.

Um den Schwenkhebel beim Einklappen der Trageinrichtung in die erste Winkelstellung rückzuführen, ist es günstig, wenn der Schwenkhebel mittels des Federelements in Richtung einer dem ersten Schwenkwinkel der Trageinrichtung entsprechenden ersten Winkelstellung vorgespannt ist, wobei ein Anschlagelement zur Begrenzung der Verschwenkung des Schwenkhebels auf die erste Winkelstellung vorgesehen ist.

Um die Federcharakteristik beim Auszieh- bzw. Schwenkvorgang einstellen zu können, ist es günstig, wenn das Anschlagelement mit einem Stellelement, insbesondere einer Stellschraube, verbunden ist, mit welcher die erste Winkelstellung des Schwenkhebels verstellbar ist.

Wenn zumindest zwei in Längsrichtung der ersten Führungsbahn voneinander beabstandete Befestigungsstellen zur wahlweisen Anordnung der Schwenkachse des Schwenkhebels vorgesehen sind, kann der Zeitpunkt verändert werden, an welchem die Kraftübertragung vom Schwenkhebel auf das erste bzw. zweite Führungselement einsetzt.

Gemäß einer ersten bevorzugten Ausführungsform erstrecken sich die im Wesentlichen geradlinige erste Führungsbahn der Führungseinrichtung und der geradlinige Abschnitt der zweiten Führungsbahn der Führungseinrichtung im Wesentlichen in vertikaler Richtung.

Für die Zwecke dieser Offenbarung beziehen sich die Orts- und Richtungsangaben wie "horizontal", "vertikal", "oben", "unten" etc. auf den montierten Gebrauchszustand des Klapptisches, bei einer Anwendung in einem Flugzeug auf die horizontale Bodenfläche des Flugzeugs.

Bei dieser Ausführung ist es günstig, wenn ein Verkleidungselement vorgesehen ist, welches zwischen einer eine Ausziehöffnung für die Trageinrichtung verschließenden Stellung und einer die Ausziehöffnung für die Trageinrichtung freigebenden Stellung verschwenkbar ist. Das Verkleidungselement ist vorzugsweise um eine im Wesentlichen horizontale Schwenkachse verschwenkbar. Das Verkleidungselement kann die Oberseite eines Gehäuses bilden, mit welchem der Klapptisch insbesondere in einer Seitenlehne oder einer Seitenverkleidung eines Flugzeugs eingebaut wird.

Um die Bedienung besonders einfach zu gestalten, ist vorzugsweise ein Schalter zur Aktivierung der Antriebseinheit vorgesehen, welcher durch Verschwenkung des Verkleidungselements betätigbar ist. Bei dieser Ausführung kann das Verkleidungselement an dem Schalter angeschlagen bzw. davon abgehoben werden, um ausgehend von der Verstauposition den Ausziehvorgang einzuleiten. Umgekehrt kann der Schalter über das Verkleidungselement betätigt werden, um ausgehend von der Gebrauchsposition den Einklappvorgang einzuleiten. Zu diesem Zweck kann der Schalter über eine Steuereinheit mit der Antriebseinheit verbunden sein.

Gemäß einer alternativen bevorzugten Ausführung weist die Ausziehvorrichtung einen Kippmechanismus zum Kippen der Führungseinrichtung für die Trageinrichtung aus der im Wesentlichen senkrechten Verstauposition in eine dazu geneigte Anfangsposition auf. Bei dieser Ausführung kann ein fixes bzw. unverschwenkbares Verkleidungselement an der Oberseite des Klapptisches vorgesehen sein, welches im montierten Betriebszustand vorzugsweise im Wesentlichen horizontal angeordnet ist. Um den Klapptisch aus der Verstau- in die Gebrauchsposition zu bringen, wird zunächst der Kippmechanismus aktiviert, mit welchem die zumindest eine Führungseinrichtung um eine vorzugsweise im Wesentlichen horizontale Schwenkachse gekippt wird. Daraufhin kann die Trageinrichtung mittels der Antriebseinheit von der Verstau- über die Auszieh- in die Gebrauchsposition überführt werden, wobei die Trageinrichtung mit der Tischplatte im verkippten Zustand an dem unbeweglichen Verkleidungselement vorbei geführt werden kann. Bei dieser Ausführung kann ebenfalls ein Schalter vorgesehen sein, welcher über eine Steuereinheit mit der Antriebseinheit verbunden ist. Beispielsweise kann ein Druckschalter an dem fixen Verkleidungselement vorgesehen sein.

Die Erfindung wird nachstehend anhand von bevorzugten Ausführungsbeispielen ausführlicher erläutert, und ist durch die beigefügten Ansprüche beschränkt. In der Zeichnung zeigt:
Fig. 1 eine Ansicht eines erfindungsgemäßen Klapptisches im eingebauten Zustand in einer Seitenverkleidung eines Flugzeugs;
Fig. 2 eine Ansicht des Klapptisches gemäß Fig. 1 (ohne die Seitenverkleidung), wobei eine Trageinrichtung für eine zweiteilige Tischklappe in einer vertikalen Verstauposition angeordnet ist;
Fig. 3 eine Ansicht des Klapptisches gemäß Fig. 1, 2, wobei ein oberes Verkleidungselement des Klapptisches zum Auslösen des Ausziehvorganges nach oben geklappt wurde;
Fig. 4 eine Ansicht des Klapptisches gemäß Fig. 1 bis 3, wobei die Trageinrichtung mit der Tischplatte in eine vertikale Ausziehposition nach oben verschoben wurde;
Fig. 5 eine Ansicht des Klapptisches gemäß Fig. 1 bis 4, wobei die Trageinrichtung mit der Tischplatte in eine horizontale Gebrauchsposition nach unten geklappt wurde;
Fig. 6 eine Ansicht des Klapptisches gemäß Fig. 1 bis 5, wobei das obere Verkleidungselement nach unten geklappt wurde;
Fig. 7 eine Ansicht des Klapptisches gemäß Fig. 1 bis 6, wobei die Tischplatte ausgeklappt wurde;
Fig. 8 bis 10 schematische Seitenansichten des Klapptisches während des Ausziehvorganges;
Fig. 11 bis 13 Detailansichten einer Führungseinrichtung des Klapptisches in verschiedenen Stadien beim Verschwenken der Trageinrichtung mit der Tischplatte von der Auszieh- in die Gebrauchsposition;
Fig. 14 bis 19 Ansicht einer weiteren erfindungsgemäßen Ausführungsform des Klapptisches, welcher beim Ausklappvorgang zunächst aus der Verstauposition (Fig. 14) in eine verkippte Anfangsposition (Fig. 15) gebracht wird, danach in eine Ausziehposition (Fig. 16) nach oben verschoben wird, in eine Zwischenstellung (Fig. 17) geklappt, danach in die Gebrauchsposition (Fig. 18) gekippt wird, wobei schließlich die Tischplatte ausgeklappt wird (Fig. 19).

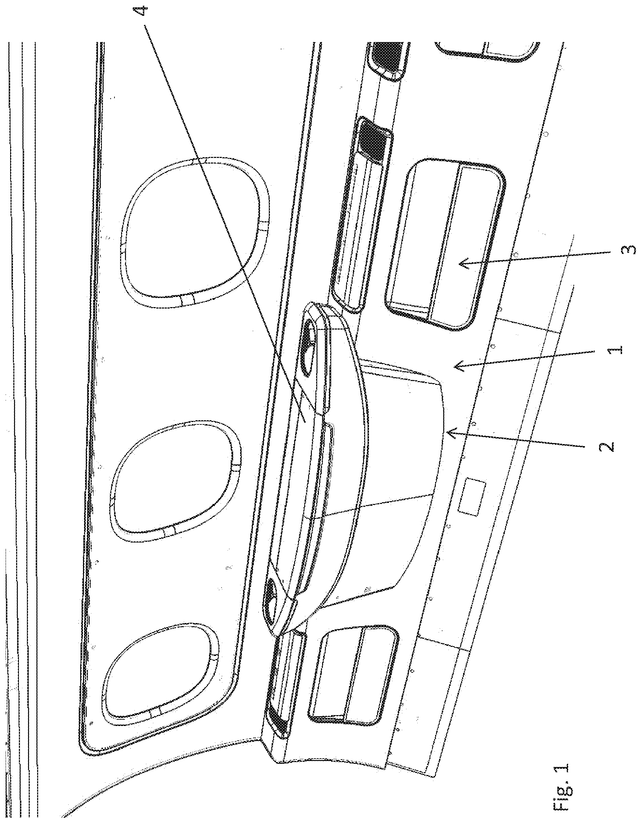

Fig. 1 zeigt einen Klapptisch 1, welcher in einer Seitenverkleidung 2 eines Flugzeuges 3 eingebaut ist. In der gezeigten Verstauposition ist der Klapptisch 1 vollständig in der Seitenverkleidung 2 verborgen. Die Seitenverkleidung 2 weist diverse Verkleidungselemente auf, wobei ein oberseitiges Verkleidungselement 4 um eine horizontale Schwenkachse verschwenkbar ist, um eine Ausziehöffnung 5 zum Ausziehen des Klapptisches 1 freizugeben bzw. zu verschließen. Der Klapptisch 1 weist eine Tischplatte 6 auf, welche in der gezeigten Ausführung einen Vorderteil 7 und einen Hinterteil 8 aufweist. Der Vorteilteil 7 und der Hinterteil 8 der Tischplatte 6 sind über Scharniere miteinander verbunden, wobei der Vorderteil 7 um 180° auf den Hinterteil 8 geklappt werden kann.

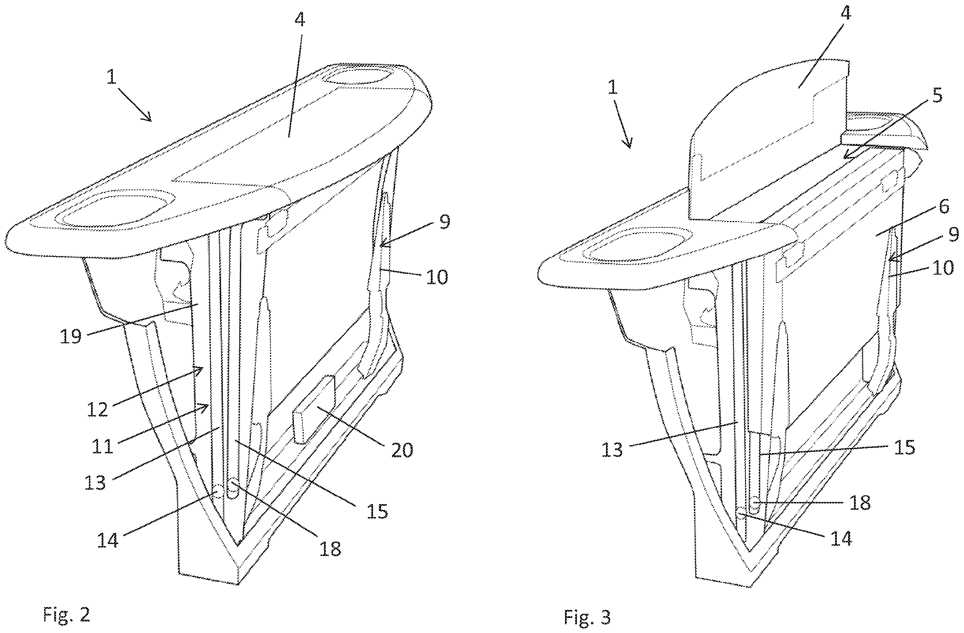

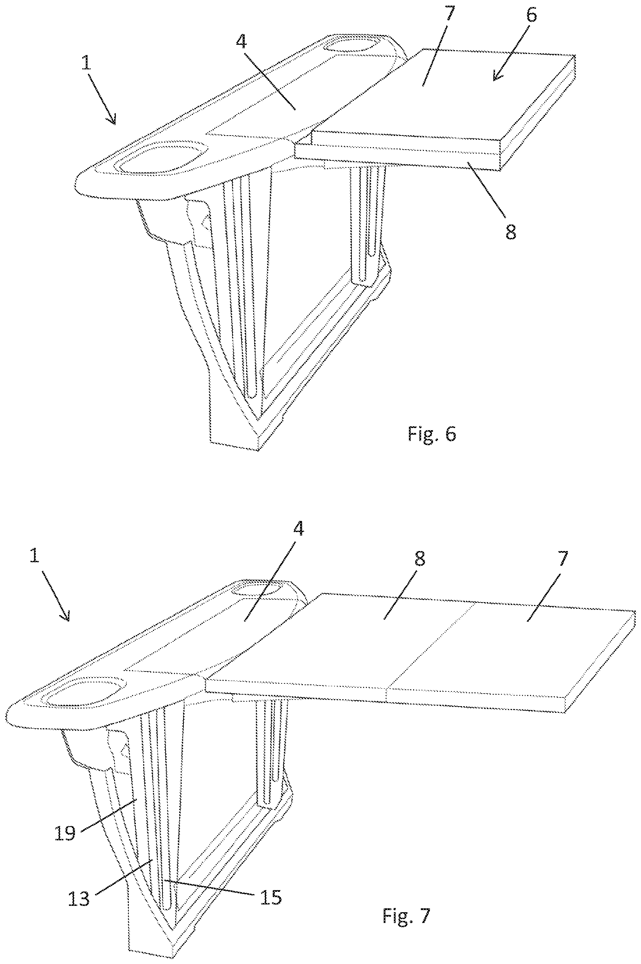

Wie aus Fig. 2 bis 10 ersichtlich, ist die Tischplatte 6 an einer Trageinrichtung 9 angebracht, welche je einen Tragarm 10 an gegenüberliegenden Seiten der Tischplatte 6 aufweist. Die Tragarme 10 sind an der Unterseite der Tischplatte 6 (d.h. gegenüberliegend der Gebrauchsoberfläche der Tischplatte 6) fixiert. Zum Überführen der Trageinrichtung 9 für die Tischplatte 6 aus der Verstauposition, in welcher die Tischplatte 6 im Wesentlichen vertikal angeordnet ist, in eine Gebrauchsposition, in welcher die Tischplatte 6 im Wesentlichen horizontal angeordnet ist, ist eine nachstehend näher erläuterte Ausziehvorrichtung 11 vorgesehen. Die Ausziehvorrichtung 11 weist eine Führungseinrichtung 12 auf, mit welcher die Trageinrichtung 9 während des gesamten Ausklappvorgangs, d.h. von der Verstauposition über die Ausziehposition in die Gebrauchsposition, geführt wird. Um den Klapptisch 1 beidseitig gleichmäßig anzuheben, weist die Ausziehvorrichtung 11 zwei Führungseinrichtungen 12 zum Führen je eines Tragarms 10 der Trageinrichtung 9 auf.

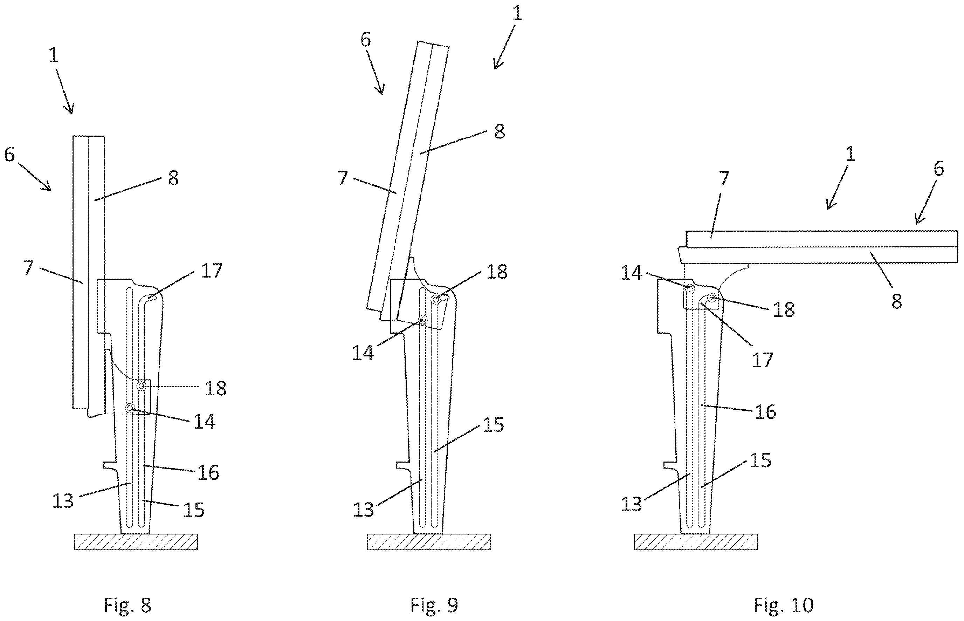

Wie insbesondere aus Fig. 8 bis 10 ersichtlich, weist die Führungseinrichtung 12 eine geradlinige bzw. lineare erste Führungsbahn 13 auf, in welcher ein erstes Führungselement 14 an der Trageinrichtung 9 geführt wird. Darüber hinaus weist die Führungseinrichtung 12 benachbart der ersten Führungsbahn 13 eine zweite Führungsbahn 15 auf, welche sich aus einem geradlinigen Abschnitt 16 und einem daran unmittelbar anschließenden bogenförmigen Abschnitt 17 zusammensetzt. Die Trageinrichtung 9 ist mit einem zweiten Führungselement 18 verbunden, welches entlang der zweiten Führungsbahn 15 geführt wird. In Gebrauch wird die Trageinrichtung 9 ausgehend von der Verstauposition zunächst entlang des geradlinigen Abschnitts 16 der zweiten Führungsbahn 15 der Führungseinrichtung 12 in die Ausziehposition nach oben verschoben und danach entlang des bogenförmigen Abschnitts 17 der zweiten Führungsbahn 15 der Führungseinrichtung 12 von der Ausziehposition in die Gebrauchsposition verschwenkt.

Wie aus Fig. 8 bis 10 weiters ersichtlich, weist der bogenförmige Abschnitt 17 der zweiten Führungsbahn 15 jeder Führungseinrichtung 12 einen Mittelpunktswinkel von im Wesentlichen 90° auf, welcher dem Schwenkwinkel der Trageinrichtung 9 von der Auszieh- in die Gebrauchsposition entspricht. Jede Führungseinrichtung 12 ist in der gezeigten Ausführung durch ein Plattenelement 19 gebildet ist, an welchem die erste 13 und die zweite Führungsbahn 15 einteilig ausgebildet sind.

Wie aus Fig. 2 (schematisch) ersichtlich, ist die Führungseinrichtung 12 mit einer Antriebseinheit 20 (in den Fig. 3ff nicht eingezeichnet) verbunden, mit welcher die Trageinrichtung 9 von der Verstauposition über die Ausziehposition in die Gebrauchsposition überführbar ist. Die Antriebseinheit 20 ist in der gezeigten Ausführung durch einen einzelnen Elektromotor gebildet, welcher dazu eingerichtet ist, das erste Führungselement 14 entlang der ersten Führungsbahn 13 der Führungseinrichtung 12 zu bewegen. Währenddessen wird das zweite Führungselement 18 passiv entlang der zweiten Führungsbahn 15 der Führungseinrichtung 12 geführt. Die Antriebseinheit 20 ist mit dem ersten Führungselement 14 in einer Weise gekoppelt, dass das erste Führungselement 14 in Drehbewegung versetzt wird. Das erste Führungselement 14 ist mit einem Kraftübertragungselement 21 verbunden, mit welchem die Drehbewegung des ersten Führungselements 14 in eine lineare Bewegung des ersten Führungselements 14 entlang der ersten Führungsbahn 13 umgesetzt wird. Als Kraftübertragungselement 21 ist in der gezeigten Ausführung ein Zahnrad 22 vorgesehen, welches drehfest mit dem freien Ende des ersten Führungselement 14 verbunden ist, das durch die erste Führungsbahn 13 auf die von der Antriebseinheit 20 abgewandte Seite der Führungseinrichtung 12 geführt ist. Das Zahnrad 22 läuft auf einer ortsfesten Zahnstange 23 ab, welche im Wesentlichen dieselbe Länge wie die erste Führungsbahn 13 der Führungseinrichtung 12 aufweist.

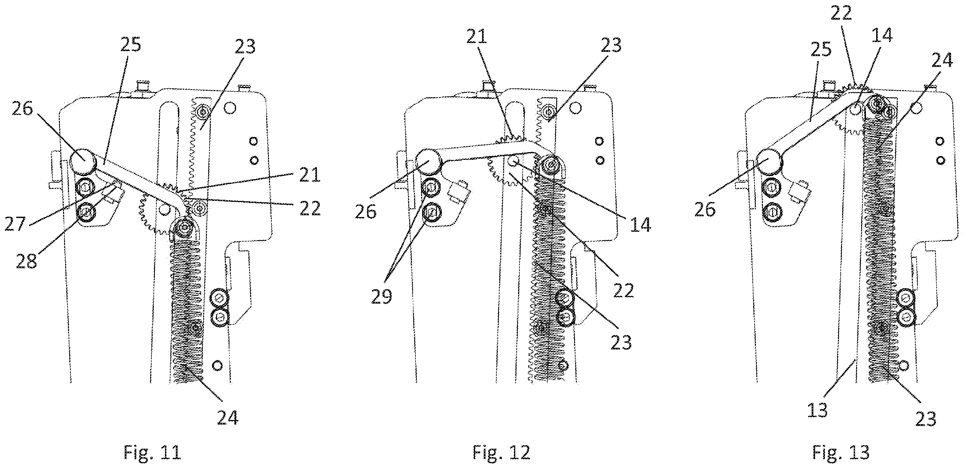

Wie aus Fig. 11 bis 13 weiters ersichtlich, weist der Klapptisch 1 zudem ein Federelement 24 auf, welches beim Ausklappen der Verschwenkung der Trageinrichtung 9 in Richtung der Gebrauchsposition entgegenwirkt und beim Einklappen die Verschwenkung der Trageinrichtung 9 aus der Gebrauchsposition in Richtung der Ausziehposition unterstützt. Als Federelement 24 ist in der gezeigten Ausführung eine Schraubenfeder vorgesehen. Das eine Ende des Federelements 24 ist ortsfest gelagert. Das andere Ende des Federelements 24 ist mit einem Schwenkhebel 25 verbunden ist, welcher durch das erste Führungselement 14 an der Trageinrichtung 9 gegen die Kraft des Federelements 24 verschwenkbar ist.

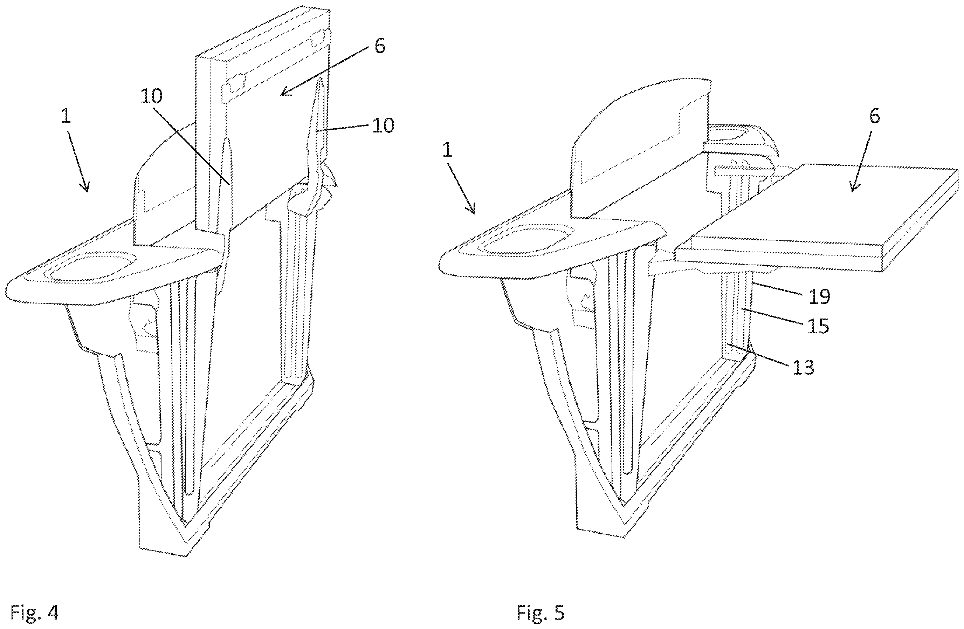

Wie aus Fig. 11 bis 13 weiters ersichtlich, ist der Abstand zwischen der Angriffsstelle des ersten Führungselements 14 an dem Schwenkhebel 25 und der Schwenkachse 26 des Schwenkhebels 25 bei einem ersten Schwenkwinkel der Trageinrichtung 9 während der Verschwenkung von der vertikalen Ausziehposition in Richtung der horizontalen Gebrauchsposition größer als bei einem zweiten Schwenkwinkel der Trageinrichtung 9. Darüber hinaus ist der Abstand zwischen der Angriffsstelle des ersten Führungselements 14 an dem Schwenkhebel 25 und der Schwenkachse 26 des Schwenkhebels 25 bei einem dritten Schwenkwinkel der Trageinrichtung 9 während der Verschwenkung von der vertikalen Ausziehposition in Richtung der horizontalen Gebrauchsposition größer als bei dem zweiten Schwenkwinkel der Trageinrichtung 9. Die Trageinrichtung 9 durchläuft beim Ausklappen des Klapptisches 1 nacheinander den ersten Schwenkwinkel, zweiten Schwenkwinkel und dritten Schwenkwinkel. In der Stellung gemäß Fig. 5 ist der Abstand zwischen der Drehachse des ersten Führungselements 14 und der Schwenkachse 26 des Schwenkhebels 25 minimal, wohingegen der Abstand zwischen der Drehachse des ersten Führungselements 24 und dem freien Ende des Schwenkhebels 25, an welchem das Federelement 24 angreift, maximal ist. Aufgrund dieser Hebelverhältnisse ist die Kraftübertragung vom Schwenkhebel 25 auf das erste Führungselement 14 in dieser Stellung maximal.

Wie aus Fig. 11 bis 13 weiters ersichtlich, ist der Schwenkhebel 25 mittels des Federelements 24 in Richtung einer dem ersten Schwenkwinkel der Trageinrichtung entsprechenden ersten Winkelstellung vorgespannt. Zur Begrenzung der Verschwenkung des Schwenkhebels 25 auf die erste Winkelstellung ist ein Anschlagelement 27 vorgesehen. Das Anschlagelement 27 ist mit einem Stellelement 28 in Form einer Stellschraube verbunden, mit welcher die erste Winkelstellung des Schwenkhebels 25 je nach Anwendung verstellbar ist. Darüber hinaus sind mehrere, in der gezeigten Ausführung drei, in Längsrichtung der ersten Führungsbahn 13 voneinander beabstandete Befestigungsstellen 29 zur wahlweisen Anordnung der Schwenkachse 26 des Schwenkhebels 25 vorgesehen.

In der Ausführung der Fig. 1 bis 10 erstreckt sich die geradlinige erste Führungsbahn 13 der Führungseinrichtung 12 und der geradlinige Abschnitt 16 der zweiten Führungsbahn 15 der Führungseinrichtung 12 im Wesentlichen in vertikaler Richtung, wobei die Führungseinrichtung 12 ortsfest angeordnet ist. Bei dieser Ausführung ist das Verkleidungselement 4 zwischen einer eine Ausziehöffnung 30 für die Trageinrichtung 9 verschließenden Stellung und einer die Ausziehöffnung 5 für die Trageinrichtung 9 freigebenden Stellung verschwenkbar. Zur Aktivierung der Antriebseinheit 20 ist ein Schalter vorgesehen, welcher durch Verschwenkung des Verkleidungselements 4 betätigbar ist.

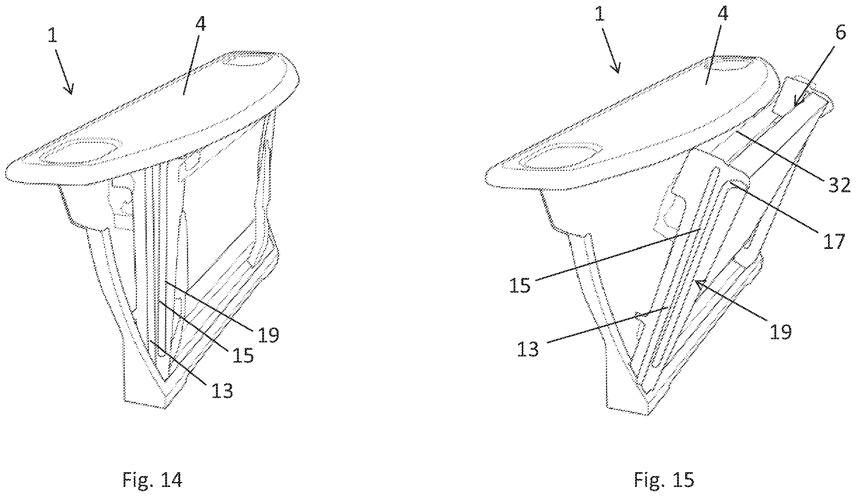

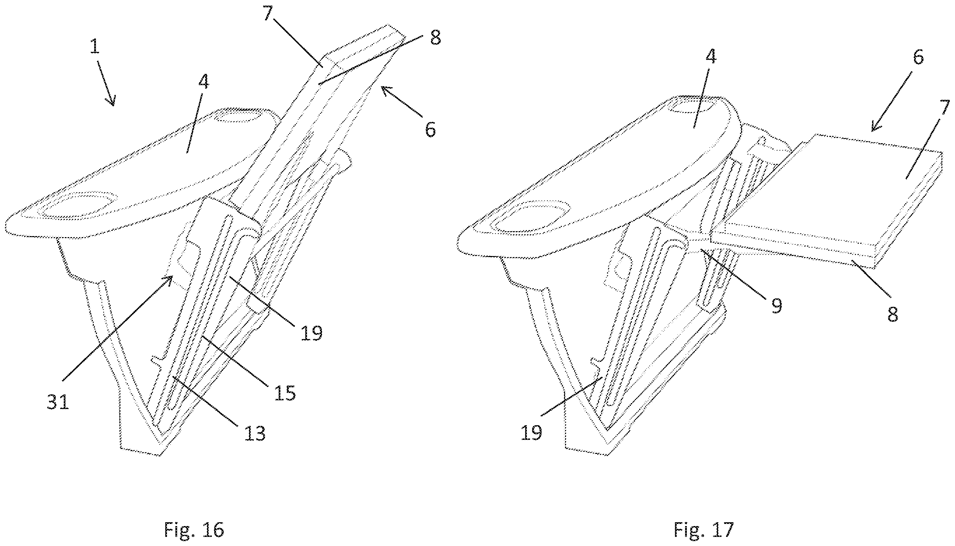

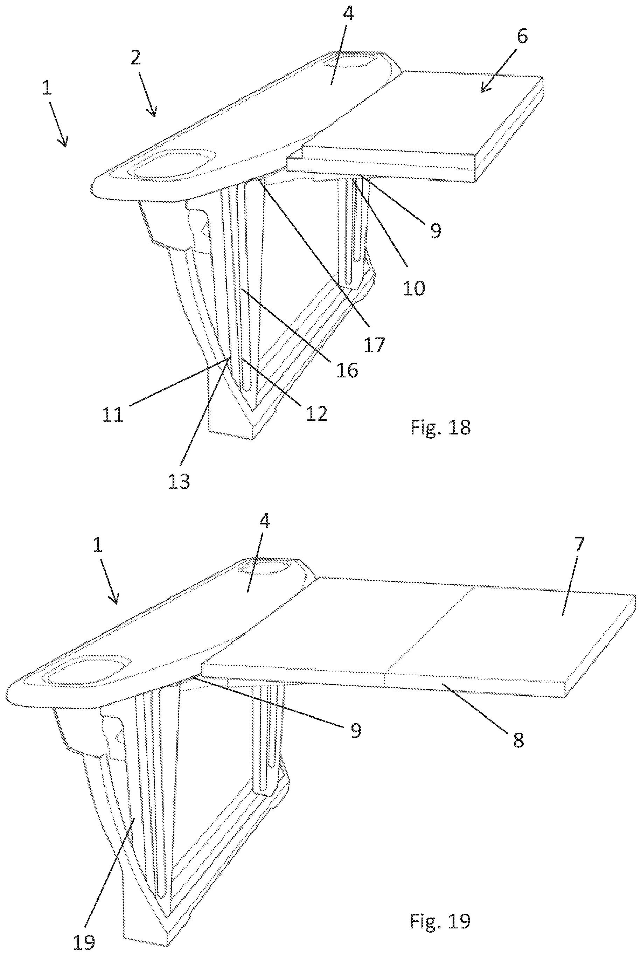

In der Ausführung der Fig. 14 bis 19 weist die Ausziehvorrichtung 11 hingegen einen (nur schematisch eingezeichneten) Kippmechanismus 32 zum Kippen der Führungseinrichtung 12 für die Trageinrichtung 9 aus der im Wesentlichen senkrechten Verstauposition (vgl. Fig. 14) in eine dazu geneigte Anfangsposition (vgl. Fig. 15) auf. Bei dieser Ausführung ist das Verkleidungselement 4 unbeweglich bzw. ortsfest angeordnet. Der Klapptisch 1 wird in der gekippten Stellung an dem Verkleidungselement 4 vorbei in die Ausziehstellung (vgl. Fig. 16) geführt, in welcher die Trageinrichtung bzw. die Tischplatte im Wesentlichen vertikal, d.h. lediglich um den Kippwinkel des Kippmechanismus 32 geneigt, angeordnet ist. Daraufhin wird die Tischplatte 6 zunächst in eine Zwischenstellung (vgl. Fig. 17) geklappt wird, bevor die Führungseinrichtung 12 in die vertikale Gebrauchsposition (vgl. Fig. 18) zurückgekippt wird. Schließlich wird die zweiteilige Tischplatte 6 auseinander geklappt.

## Patentansprüche

1. Klapptisch (1), insbesondere für ein Flugzeug (3), mit einer Tischplatte (6), mit einer Trageinrichtung (9) für die Tischplatte (6), mit einer Ausziehvorrichtung (11) zum Überführen der Trageinrichtung (9) für die Tischplatte (6) aus einer im Wesentlichen vertikalen Verstauposition über eine insbesondere im Wesentlichen vertikale Ausziehposition in eine im Wesentlichen horizontale Gebrauchsposition, wobei die Ausziehvorrichtung (11) eine Führungseinrichtung (12) zum Führen der Trageinrichtung (9) zwischen der Verstauposition und der Ausziehposition aufweist, **dadurch gekennzeichnet, dass** die Trageeinrichtung (9) je einen Tragarm (10) an gegenüberliegenden Seiten der Tischplatte (6) aufweist, wobei die Tragarme (10) an der Unterseite der Tischplatte (6) fixiert sind, wobei die Führungseinrichtung (12) eine im Wesentlichen geradlinige erste Führungsbahn (13) für ein erstes Führungselement (14) an der Trageinrichtung (9) und eine einen geradlinigen Abschnitt (16) und einen bogenförmigen Abschnitt (17) aufweisende zweite Führungsbahn (15) für ein zweites Führungselement (18) an der Trageinrichtung (9) aufweist, wobei die Trageinrichtung (9) entlang des geradlinigen Abschnitts (16) der zweiten Führungsbahn (15) der Führungseinrichtung (12) von der Verstauposition in die Ausziehposition verschieblich und entlang des bogenförmigen Abschnitts (17) der zweiten Führungsbahn (15) der Führungseinrichtung (12) von der Ausziehposition in die Gebrauchsposition verschwenkbar ist, wobei der bogenförmige Abschnitt (17) der zweiten Führungsbahn (15) der Führungseinrichtung (12) einen Mittelpunktswinkel von im Wesentlichen 90° aufweist, wobei beim Verschieben des zweiten Führungselements (18) entlang des bogenförmigen Abschnitts (17) der zweiten Führungsbahn (15) die Trageinrichtung (9) mit der daran befestigten Tischplatte (6) um denselben Winkel von im Wesentlichen 90° verschwenkt wird.

2. Klapptisch (1) nach Anspruch 1, **dadurch gekennzeichnet, dass** die Ausziehvorrichtung (11) zwei Führungseinrichtungen (12) zum Führen je eines Tragarms (10) der Trageinrichtung (9) aufweist und vorzugsweise als Führungseinrichtung (12) ein Plattenelement (19) vorgesehen ist, an welchem die erste (13) und die zweite Führungsbahn (15) ausgebildet sind.

3. Klapptisch (1) nach einem der Ansprüche 1 oder 2, **dadurch gekennzeichnet, dass** ein Federelement (24) vorgesehen ist, welches der Verschwenkung der Trageinrichtung (9) in Richtung der Gebrauchsposition entgegenwirkt und/oder welches die Verschwenkung der Trageinrichtung (9) aus der Gebrauchsposition in Richtung der Ausziehposition unterstützt.

4. Klapptisch (1) nach Anspruch 3, **dadurch gekennzeichnet, dass** das Federelement (24) mit einem Schwenkhebel (25) verbunden ist, welcher durch das erste (14) oder das zweite Führungselement (18) an der Trageinrichtung (9) gegen die Kraft des Federelements (24) verschwenkbar ist.

5. Klapptisch (1) nach Anspruch 4, **dadurch gekennzeichnet, dass** der Abstand zwischen der Angriffsstelle des ersten (14) bzw. zweiten Führungselements (18) an dem Schwenkhebel (25) und der Schwenkachse (26) des Schwenkhebels (25) bei einem ersten Schwenkwinkel der Trageinrichtung (9) beim Verschwenken von der im Wesentlichen vertikalen Ausziehposition in Richtung der im Wesentlichen horizontalen Gebrauchsposition größer als bei einem zweiten Schwenkwinkel der Trageinrichtung (9) ist.

6. Klapptisch (1) nach Anspruch 5, **dadurch gekennzeichnet, dass** der Abstand zwischen der Angriffsstelle des ersten (14) bzw. zweiten Führungselements (18) an dem Schwenkhebel (25) und der Schwenkachse (26) des Schwenkhebels (25) bei einem dritten Schwenkwinkel der Trageinrichtung (9) beim Verschwenken von der im Wesentlichen vertikalen Ausziehposition in Richtung der im Wesentlichen horizontalen Gebrauchsposition größer als bei dem zweiten Schwenkwinkel der Trageinrichtung (9) ist, wobei vorzugsweise der erste Schwenkwinkel der Trageinrichtung (9) kleiner als der zweite Schwenkwinkel der Trageinrichtung (9) ist, welcher kleiner als der dritte Schwenkwinkel der Trageinrichtung (9) ist.

7. Klapptisch (1) nach einem der Ansprüche 4 bis 6, **dadurch gekennzeichnet, dass** der Schwenkhebel mittels des Federelements (24) in Richtung einer dem ersten Schwenkwinkel der Trageinrichtung (9) entsprechenden ersten Winkelstellung vorgespannt ist, wobei ein Anschlagelement (27) zur Begrenzung der Verschwenkung des Schwenkhebels (25) auf die erste Winkelstellung vorgesehen ist, wobei vorzugsweise das Anschlagelement (27) mit einem Stellelement (28), insbesondere einer Stellschraube, verbunden ist, mit welcher die erste Winkelstellung des Schwenkhebels (25) verstellbar ist.

8. Klapptisch (1) nach einem der Ansprüche 4 bis 7, **dadurch gekennzeichnet, dass** zumindest zwei in Längsrichtung der ersten Führungsbahn (13) voneinander beabstandete Befestigungsstellen (29) zur wahlweisen Anordnung der Schwenkachse (26) des Schwenkhebels (25) vorgesehen sind.

9. Klapptisch (1) nach einem der Ansprüche 1 bis 8, **dadurch gekennzeichnet, dass** die Führungseinrichtung (12) mit einer Antriebseinheit (20), vorzugsweise einem Elektromotor, verbunden ist, mit welcher die Trageinrichtung (9) von der Verstauposition über die Ausziehposition in die Gebrauchsposition überführbar ist.

10. Klapptisch (1) nach Anspruch 9, **dadurch gekennzeichnet, dass** die Antriebseinheit (20) dazu eingerichtet ist, das erste Führungselement (14) entlang der ersten Führungsbahn (13) der Führungseinrichtung (12) zu bewegen, wobei das zweite Führungselement (18) vorzugsweise passiv entlang der zweiten Führungsbahn (15) der Führungseinrichtung (12) geführt wird.

11. Klapptisch (1) nach Anspruch 10, **dadurch gekennzeichnet, dass** die Antriebseinheit (20) dazu eingerichtet ist, das erste Führungselement (14) in Drehbewegung zu versetzen, wobei das erste Führungselement (14) an der Trageinrichtung (9) mit einem Kraftübertragungselement (21) verbunden ist, mit welchem die Drehbewegung des ersten Führungselements (14) in eine lineare Bewegung des ersten Führungselements (14) entlang der ersten Führungsbahn (3) umwandelbar ist, wobei vorzugsweise als Kraftübertragungselement (21) ein Zahnrad (22) vorgesehen ist, welches bei der Bewegung des ersten Führungselements (14) entlang der ersten Führungsbahn (13) mit einer Zahnstange (23) kämmt, wobei die Zahnstange (23) vorzugsweise im Wesentlichen dieselbe Länge wie die erste Führungsbahn (13) der Führungseinrichtung (12) aufweist.

12. Klapptisch (1) nach einem der Ansprüche 1 bis 11, **dadurch gekennzeichnet, dass** sich die im Wesentlichen geradlinige erste Führungsbahn (13) der Führungseinrichtung (12) und der geradlinige Abschnitt (16) der zweiten Führungsbahn (15) der Führungseinrichtung (12) im Wesentlichen in vertikaler Richtung erstrecken.

13. Klapptisch (1) nach Anspruch 12, **dadurch gekennzeichnet, dass** ein Verkleidungselement (4) vorgesehen ist, welches zwischen einer eine Ausziehöffnung (30) für die Trageinrichtung (9) verschließenden Stellung und einer die Ausziehöffnung (30) für die Trageinrichtung freigebenden Stellung verschwenkbar ist, wobei vorzugsweise ein Schalter zur Aktivierung der Antriebseinheit (30) vorgesehen ist, welcher durch Verschwenkung des Verkleidungselements (4) betätigbar ist.

14. Klapptisch (1) nach einem der Ansprüche 1 bis 13, **dadurch gekennzeichnet, dass** die Ausziehvorrichtung (4) einen Kippmechanismus (32) zum Kippen der Führungseinrichtung (12) für die Trageinrichtung (9) aus der im Wesentlichen senkrechten Verstauposition in eine dazu geneigte Anfangsposition aufweist.

15. Flugzeug (3) mit einem Klapptisch (1), **dadurch gekennzeichnet, dass** der Klapptisch (1) nach einem der Ansprüche 1 bis 14 ausgebildet ist.

## Claims

1. Folding table (1), in particular for an aircraft (3), comprising a tabletop (6), a supporting device (9) for the tabletop (6), a pull-out device (11) for moving the supporting device (9) for the tabletop (6) from a substantially vertical stowing position into a substantially horizontal usage position via an in particular substantially vertical pull-out position, the pull-out device (11) having a guiding device (12) for guiding the supporting device (9) between the stowing position and the pull-out position, **characterized in that** the supporting device (9) has a supporting arm (10) on each opposite side of the tabletop (6), the supporting arms (10) being fixed to the bottom side of the tabletop (6), the guiding device (12) having a substantially linear first guide track (13) for a first guide element (14) on the supporting device (9) and a second guide track (15) for a second guide element (18) on the supporting device (9), which second guide track has a linear segment (16) and an arcuate segment (17), the supporting device (9) being slidable along the linear segment (16) of the second guide track (15) of the guiding device (12) from the stowing position into the pull-out position and pivotable from the pull-out position into the usage position along the arcuate segment (17) of the second guide track (15) of the guiding device (12), the arcuate segment (17) of the second guide track (15) of the guiding device (12) having a central angle of substantially 90°, the supporting device (9) together with the tabletop (6) attached thereto being pivoted by the same angle of substantially 90° when the second guide element (18) is slid along the arcuate segment (17) of the second guide track (15).

2. Folding table (1) according to claim 1, **characterized in that** the pull-out device (11) has two guiding devices (12) for guiding one supporting arm (10) each of the supporting device (9) and a plate element (19) is preferably provided as the guiding device (12), on which plate element the first (13) and the second guide track (15) are formed.

3. Folding table (1) according to either claim 1 or claim 2, **characterized in that** a spring element (24) is provided, which counteracts the pivoting of the supporting device (9) in the direction of the usage position and/or which supports the pivoting of the supporting device (9) from the usage position in the direction of the pull-out position.

4. Folding table (1) according to claim 3, **characterized in that** the spring element (24) is connected to a pivot lever (25), which can be pivoted against the force of the spring element (24) by means of the first (14) or the second guide element (18) on the supporting device (9).

5. Folding table (1) according to claim 4, **characterized in that** the distance between the point of application of the first (14) or second guide element (18), respectively, on the pivot lever (25) and the pivot axis (26) of the pivot lever (25) is larger in the case of a first pivot angle of the supporting device (9) in response to pivoting from the substantially vertical pull-out position in the direction of the substantially horizontal usage position than in the case of a second pivot angle of the supporting device (9).

6. Folding table (1) according to claim 5, **characterized in that** the distance between the point of application of the first (14) or second guide element (18), respectively, on the pivot lever (25) and the pivot axis (26) of the pivot lever (25) is larger in the case of a third pivot angle of the supporting device (9) in response to pivoting from the substantially vertical pull-out position in the direction of the substantially horizontal usage position than in the case of the second pivot angle of the supporting device (9), the first pivot angle of the supporting device (9) preferably being smaller than the second pivot angle of the supporting device (9), which is smaller than the third pivot angle of the supporting device (9).

7. Folding table (1) according to any of claims 4 to 6, **characterized in that** the pivot lever is pretensioned in the direction of a first angular position, which corresponds to the first pivot angle of the supporting device (9), by means of the spring element (24), a stop element (27) for limiting the pivoting of the pivot lever (25) to the first angular position being provided, the stop element (27) preferably being connected to a control element (28), in particular an adjusting screw, by means of which the first angular position of the pivot lever (25) can be adjusted.

8. Folding table (1) according to any of claims 4 to 7, **characterized in that** at least two fastening locations (29) are provided, which are spaced apart from one another in the longitudinal direction of the first guide track (13), for the selective arrangement of the pivot axis (26) of the pivot lever (25).

9. Folding table (1) according to any of claims 1 to 8, **characterized in that** the guiding device (12) is connected to a drive unit (20), preferably an electric motor, by means of which the supporting device (9) can be moved from the stowing position into the usage position via the pull-out position.

10. Folding table (1) according to claim 9, **characterized in that** the drive unit (20) is designed to move the first guide element (14) along the first guide track (13) of the guiding device (12), the second guide element (18) being preferably guided passively along the second guide track (15) of the guiding device (12).

11. Folding table (1) according to claim 10, **characterized in that** the drive unit (20) is designed to set the first guide element (14) into rotation, the first guide element (14), on the supporting device (9), being connected to a power transmission element (21), by means of which the rotation of the first guide element (14) can be converted into a linear movement of the first guide element (14) along the first guide track (3), a gearwheel (22) preferably being provided as the power transmission element (21), which gearwheel meshes with a toothed rack (23) in response to the movement of the first guide element (14) along the first guide track (13), the toothed rack (23) preferably having substantially the same length as the first guide track (13) of the guiding device (12).

12. Folding table (1) according to any of claims 1 to 11, **characterized in that** the substantially linear first guide track (13) of the guiding device (12) and the linear segment (16) of the second guide track (15) of the guiding device (12) extend substantially in the vertical direction.

13. Folding table (1) according to claim 12, **characterized in that** a cladding element (4) is provided, which can be pivoted between a position which closes a pull-out opening (30) for the supporting device (9) and a position which releases the pull-out opening (30) for the supporting device, a switch for activating the drive unit (30) preferably being provided, which switch can be operated by pivoting the cladding element (4).

14. Folding table (1) according to any of claims 1 to 13, **characterized in that** the pull-out device (4) has a tilt mechanism (32) for tilting the guiding device (12) for the supporting device (9) from the substantially vertical stowing position into an initial position, which is inclined relative thereto.

15. Aircraft (3) comprising a folding table (1), **characterized in that** the folding table (1) is designed according to any of claims 1 to 14.

## Revendications

1. Table pliante (1), plus particulièrement pour un avion (3), avec un plateau de table (6), avec un dispositif de support (9) pour le plateau de table (6), avec un dispositif d'extension (11) pour le déplacement du dispositif de support (9) pour le plateau de table (6) d'une position de rangement globalement verticale, en passant par une position d'extension globalement verticale, vers une position d'utilisation globalement horizontale, dans laquelle le dispositif d'extension (11) comprend un dispositif de guidage (12) pour le guidage du dispositif de support (9) entre la position de rangement et la position d'extension, **caractérisée en ce que** le dispositif de support (9) comprend un bras de support (10) sur chacun des côtés opposés du plateau de table (6), dans laquelle les bras de support (10) sont fixés au côté inférieur du plateau de table (6), dans laquelle le dispositif de guidage (12) comprend une première piste de guidage (13), globalement en ligne droite, pour un premier élément de guidage (14) sur le dispositif de support (9) et une deuxième piste de guidage (15) comprenant une portion en ligne droite (16) et une portion en arc de cercle (17), pour un deuxième élément de guidage (18) sur le dispositif de support (9), dans laquelle le dispositif de support (9) peut être pivoté de manière coulissante le long de la portion en ligne droite (16) de la deuxième piste de guidage (15) du dispositif de guidage (12) de la position de rangement vers la position d'extension et le long de la portion en arc de cercle (17) de la deuxième piste de guidage (15) du dispositif de guidage (12) de la position d'extension vers la position d'utilisation, dans laquelle la portion en arc de cercle (17) de la deuxième piste de guidage (15) du dispositif de guidage (12) comprend un angle au centre de globalement 90°, dans laquelle, lors du coulissement du deuxième élément de guidage (18) le long de la portion en arc de cercle (17) de la deuxième piste de guidage (15), le dispositif de support (9) avec le plateau de table (6), qui y est fixé, est pivoté du même angle de globalement 90°.

2. Table pliante (1) selon la revendication 1, **caractérisée en ce que** le dispositif d'extension (11) comprend deux dispositifs de guidage (12) pour le guidage de chacun des bras de support (10) du dispositif de support (9) et de préférence, en tant que dispositif de guidage (12), un élément de plateau (19) est prévu, sur lequel sont réalisées les première (13) et deuxième pistes de guidage (15).

3. Table pliante (1) selon l'une des revendications 1 ou 2, **caractérisée en ce qu'**un élément à ressort (24) est prévu, qui agit contre le pivotement du dispositif de support (9) en direction de la position d'utilisation et/ou qui favorise le pivotement du dispositif de support (9) de la position d'utilisation en direction de la position d'extension.

4. Table pliante (1) selon la revendication 3, **caractérisée en ce que** l'élément à ressort (24) est relié avec un levier pivotant (25) qui peut être pivoté par le premier (14) ou le deuxième élément de guidage (18) sur le dispositif de support (9) contre la force de l'élément à ressort (24).

5. Table pliante (1) selon la revendication 4, **caractérisée en ce que** la distance entre le point d'attaque du premier (14) resp. du deuxième élément de guidage (18) au niveau du levier pivotant (25) et de l'axe de pivotement (26) du levier pivotant (25), dans le cas d'un premier angle de pivotement du dispositif de support (9) lors du pivotement de la position d'extension globalement verticale en direction de la position d'utilisation globalement horizontale, est supérieure à la distance dans le cas d'un deuxième angle de pivotement du dispositif de support (9).

6. Table pliante (1) selon la revendication 5, **caractérisée en ce que** la distance entre le point d'attaque du premier (14) resp. du deuxième élément de guidage (18) au niveau du levier pivotant (25) et de l'axe de pivotement (26) du levier pivotant (25), dans le cas d'un troisième angle de pivotement du dispositif de support (9) lors du pivotement de la position d'extension globalement verticale en direction de la position d'utilisation globalement horizontale, est supérieure à la distance dans le cas du deuxième angle de pivotement du dispositif de support (9), dans lequel, de préférence, le premier angle de pivotement du dispositif de support (9) est inférieur au deuxième angle de pivotement du dispositif de support (9), qui est inférieur au troisième angle de pivotement du dispositif de support (9).

7. Table pliante (1) selon l'une des revendications 4 à 6, **caractérisée en ce que** le levier pivotant est précontraint au moyen de l'élément à ressort (24) en direction d'une première position angulaire correspondant au premier angle de pivotement du dispositif de support (9),
dans laquelle un élément de butée (27) est prévu pour la limitation du pivotement du levier pivotant (25) vers la première position angulaire, dans laquelle, de préférence l'élément de butée (27) est relié avec un élément de réglage (28), plus particulièrement une vis de réglage, avec laquelle la première position angulaire du levier pivotant (25) peut être réglée.

8. Table pliante (1) selon l'une des revendications 4 à 7, **caractérisée en ce qu'**au moins deux points de fixation (29), distants entre eux dans la direction longitudinale de la première piste de guidage (13), sont prévus pour une disposition sélective de l'axe de pivotement (26) du levier pivotant (25).

9. Table pliante (1) selon l'une des revendications 1 à 8, **caractérisée en ce que** le dispositif de guidage (12) est relié avec une unité d'entraînement (20), de préférence un moteur électrique, avec lequel le dispositif de support (9) peut être déplacé de la position de rangement, en passant par la position d'extension, vers la position d'utilisation.

10. Table pliante (1) selon la revendication 9, **caractérisée en ce que** l'unité d'entraînement (20) est conçue pour déplacer le premier élément de guidage (14) le long de la première piste de guidage (13) du dispositif de guidage (12), dans laquelle le deuxième élément de guidage (18) est guidé de préférence passivement le long de la deuxième piste de guidage (15) du dispositif de guidage (12).

11. Table pliante (1) selon la revendication 10, **caractérisée en ce que** l'unité d'entraînement (20) est conçue pour mettre le premier élément de guidage (14) en rotation, dans laquelle le premier élément de guidage (14) est relié, au niveau du dispositif de support (9), avec un élément de transmission de force (21), avec lequel le mouvement de rotation du premier élément de guidage (14) peut être converti en un mouvement linéaire du premier élément de guidage (14) le long de la première piste de guidage (3), dans laquelle, de préférence, l'élément de transmission de force (21) est une roue dentée (22) qui, lors du mouvement du premier élément de guidage (14) le long de la première piste de guidage (13), s'engrène avec une crémaillère (23), dans laquelle la crémaillère (23) présente globalement la même longueur que la première piste de guidage (13) du dispositif de guidage (12).

12. Table pliante (1) selon l'une des revendications 1 à 11, **caractérisée en ce que** la première piste de guidage (13), globalement en ligne droite, du dispositif de guidage (12) et la portion en ligne droite (16) de la deuxième piste de guidage (15) du dispositif de guidage (12) s'étendent globalement dans la direction verticale.

13. Table pliante (1) selon la revendication 12, **caractérisée en ce qu'**un élément de carénage (4) est prévu, qui peut être pivoté entre une position fermant une ouverture d'extension (30) pour le dispositif de support (9) et une position libérant l'ouverture d'extension (30) pour le dispositif de support, dans laquelle, de préférence, un commutateur est prévu pour l'activation de l'unité d'entraînement (30), qui peut être actionné par le pivotement de l'élément de carénage (4).

14. Table pliante (1) selon l'une des revendications 1 à 13, **caractérisée en ce que** le dispositif d'extension (4) comprend un mécanisme de basculement (32) pour le basculement du dispositif de guidage (12) pour le dispositif de support (9) de la position de rangement globalement verticale vers une position initiale inclinée par rapport à celle-ci.

15. Avion (3) avec une table pliante (1), **caractérisé en ce que** la table pliante (1) est conçue selon l'une des revendications 1 à 14.
